# EUROPEAN PATENT SPECIFICATION

(11) **EP 1 905 318 B1**
(45) Date of publication and mention of the grant of the patent: **07.07.2010**
(21) Application number: 07121567.7
(22) Date of filing: 29.09.2004
(51) Int. Cl.: A24D 3/04

(54) **Filtered cigarette incorporating an adsorbent material**
Filterzigarette mit Adsorptionsmaterial
Cigarette à filtre incorporant un matériau adsorbant

(30) Priority: 30.09.2003 US 674908; 30.09.2003 US 675241; 30.09.2003 US 675584; 30.09.2003 US 675802; 30.09.2003 US 675937
(43) Date of publication of application: 02.04.2008
(62) Divisional of application: 04789206.2
(73) Proprietor: R.J. REYNOLDS TOBACCO COMPANY, Winston-Salem, NC 27102 (US)
(72) Inventor: Crooks, Evon, Llewellyn, Mocksville, NC 27028 (US); Taylor, Joanne, Naomi, Germanton, NC 27019 (US); Bernasek, Paul, Fischer, Lexington, NC 27295 (US); Clark, Melissa, Ann, Mocksville, NC 27028 (US); Dunlap, Sharon, Pitts, Walnut Cove, NC 27052 (US); Banerjee, Chandra, Kumar, Clemmons, NC 27012 (US); Braxton, Paul, Eugene, Greensboro, NC 27410 (US); Nestor, Timothy, Brian, Advance, NC 27006 (US); Cash, Sheila, Lynnette, Greensboro, NC 27406 (US)
(74) Representative: Hoeger, Stellrecht & Partner Patentanwälte

(56) References cited:
- EP-A- 0 579 410
- US-A- 5 129 408
- US-A- 5 724 997
- US-A1- 2002 166 563
- US-A1- 2003 106 562

## Description

### FIELD OF THE INVENTION

The present invention relates to smoking articles, and in particular, to smoking articles having the form of filtered cigarettes.

### BACKGROUND OF THE INVENTION

Popular smoking articles, such as cigarettes, have a substantially cylindrical rod shaped structure and include a charge, roll or column of smokable material such as shredded tobacco (e.g., in cut filler form) surrounded by a paper wrapper thereby forming a so-called "smokable rod" or "tobacco rod." Normally, a cigarette has a cylindrical filter element aligned in an end-to-end relationship with the tobacco rod. Typically, a filter element comprises cellulose acetate tow plasticized using triacetin, and the tow is circumscribed by a paper material known as "plug wrap." Typically, the filter element is attached to one end of the tobacco rod using a circumscribing wrapping material known as "tipping paper." It also has become desirable to perforate the tipping material and plug wrap, in order to provide dilution of drawn mainstream smoke with ambient air. Descriptions of cigarettes and the various components thereof are set forth in Tobacco Production, Chemistry and Technology, Davis et al. (Eds.) (1999). A smoker employs a cigarette by lighting one end thereof and burning the tobacco rod. The smoker then receives mainstream smoke into his/her mouth by drawing on the opposite end (e.g., the filter end) of the cigarette.

Activated carbon particles or other adsorbent materials, such as silica gel, can be incorporated into a cigarette filter. Exemplary cigarettes and filters therefor are described in U.S. Patent Nos. 3,353,543 to Sproull et al. and 4,481,958 to Ranier et al, and in PCT WO 02/37990 to Bereman. Certain commercially available filters have particles or granules of carbon (e.g., an activated carbon material or an activated charcoal material) dispersed within a fibrous material, such as described in U.S. Patent No. 6,584,979 to Xue et al. Other commercially available filters have so-called "compartment filter" or "triple filter" designs, such as those filters described in U.S. Patent Nos. 4,163,452 to Green et al.; 5,129,408 to Jakob et al.; and 6,537,186 to Veluz; as well as U.S Patent Application Publication No. 2003/0106562. European Patent Application 0 579 410 A1 describes a filter including an annular section of carbon particles surrounding a cellulose acetate filter section. U.S. Patent No. 5,360,023 to Blakley et al. describes a filter comprising a gathered paper that includes a carbonaceous material. Adsorbent materials incorporated into a cigarette filter can be used as a substrate for functional groups, such as described in U.S. Patent Nos. 6,481,442 to Dyakonov et al. and 6,595,218 to Koller et al. Flavorants can be added to activated carbon as described in U.S. Patent Application Publication No. 2003/0159703. Exemplary commercially available filters are available as SCS IV Dual Solid Charcoal Filter from American Filtrona Corp.; Triple Solid Charcoal Filter from FIL International, Ltd.; Triple Compartment Filter from Baumgartner; and ACT from FIL International, Ltd.

Cigarette filter elements that incorporate carbon have a propensity to remove certain gas phase components from the mainstream smoke that passes through the filter element during draw by the smoker. Interaction of mainstream smoke with adsorbent substances, such as carbon particles, results in a certain degree of removal of certain gas phase compounds from the smoke. Such a change in the character of the smoke can result in changes in the sensory properties of the smoke. For example, mainstream tobacco smoke that is filtered using a conventional cigarette filter element incorporating carbon can often be characterized as having slightly metallic, drying and powdery flavor characteristics.

It would be desirable to provide a cigarette filter element that efficiently removes significant amounts of certain gas phase components of mainstream cigarette smoke. It would also be desirable to provide a cigarette filter that removes gas phase components of mainstream smoke while still yielding smoke with desirable sensory characteristics.

### SUMMARY OF THE INVENTION

The present invention relates to filtered smoking articles, such as cigarettes possessing filter elements. A representative filtered smoking article includes at least one adsorbent incorporated into the filter element. The adsorbent is adapted for adsorption of one or more gas phase constituents of mainstream smoke. The adsorbent is incorporated into one or more segments of a multi-segment filter element. The filter elements of the present invention are capable of removing condensable gas phase components from mainstream tobacco smoke to a significant degree. Condensable gas phase components include organic compounds such as carbonyl compounds (e.g., acetone, formaldehyde, acrolein and acetaldehyde). The present invention provides a cigarette comprising a tobacco rod and a filter element connected to the tobacco rod, the filter element having an end proximal to the tobacco rod and an end distal to the tobacco rod.

In one embodiment, the filter element comprises a first longitudinally extending section of filter material positioned at the end of the filter element proximal to the tobacco rod (i.e., tobacco end section) and a second longitudinally extending section of filter material positioned at the end of the filter element distal to the tobacco rod (i.e., mouth end section) and spaced apart from the first section of filter material, the two sections thus forming and defining a compartment therebetween. An adsorbent material, preferably in granular form, such as granulated activated carbon, is contained within at least a portion of the compartment.

The filter element of the invention comprises an adsorbent material and at least one breakable capsule positioned in the mouth end section of filter material. The breakable capsule preferably comprises an outer gelatin shell and an inner liquid composition including one or more flavoring agents and a diluting agent. Positioning the breakable capsule downstream from the adsorbent material allows the smoker to selectively adjust the flavor of the cigarette as a means to complement taste attributes.

The first and second sections of filter material may comprise any filter material known for use in filter elements for cigarettes, such as cellulose acetate tow, gathered cellulose acetate web, polypropylene tow, gathered polypropylene web, gathered polyester web, gathered paper, and strands of reconstituted tobacco. Preferably, the first and second sections of filter material are formed from a fibrous filter material, such as plasticized cellulose acetate tow.

In one preferred embodiment, the tobacco end section of filter material of the above-described filter element has greater particulate removal efficiency than the mouth end section of filter material. For example, the tobacco end section of filter material preferably comprises filaments having a lower weight per unit length than the filaments of the mouth end section of filter material. The tobacco end section of filter material can comprise filaments having a weight per unit length of less than about 2.5 denier per filament and the mouth end section of filter material can comprise filaments having a weight per unit length of greater than about 3.0 denier per filament.

In one particularly preferred embodiment, a cigarette comprising a tobacco rod and a filter element connected to the tobacco rod is provided, the filter element having an end proximal to the tobacco rod and an end distal from the tobacco rod, wherein the filter element comprises: a first longitudinally extending section of fibrous filter material positioned at the end of the filter element proximal to the tobacco rod; a second longitudinally extending section of fibrous filter material positioned at the end of the filter element distal from the tobacco rod and spaced apart from said first section of filter material, the two sections of filter material defining a compartment therebetween; an adsorbent material in granular form contained within said compartment, said adsorbent material being selected from the group consisting of activated carbon, molecular sieves, clays, activated aluminas, silica gels, and mixtures thereof; and a plurality of ventilation holes adapted for introducing air into the filter element, said ventilation holes being located between the midpoint of said adsorbent-containing compartment and the end of said adsorbent-containing compartment proximal to said first section of filter material, wherein said first section of fibrous filter material comprises filaments having a lower weight per unit length than the filaments of said second section of fibrous filter material.

In one preferred embodiment, a cigarette comprising a tobacco rod and a filter element connected to the tobacco rod is provided, the filter element having an end proximal to the tobacco rod and an end distal from the tobacco rod, wherein the filter element comprises: a first longitudinally extending section of filter material positioned at the end of the filter element distal from the tobacco rod, said first section of filter material comprising a longitudinally extending central portion of filter material, a longitudinally extending outer portion of filter material positioned annularly around the central portion, and a compartment having a structure defined by the inner central portion; a second longitudinally extending section of filter material positioned at the end of the filter element proximal to the tobacco rod and spaced apart from said first section of filter material, the two sections of filter material defining a compartment therebetween; an adsorbent material in granular form contained within at least a portion of the compartment between said first section of filter material and said second section of filter material; and at least one breakable capsule positioned in the compartment in said first section of filter material.

It is to be understood that both the foregoing general description and the following detailed description are exemplary and explanatory only, and are not restrictive of the invention as claimed. The accompanying drawings, which are incorporated herein by reference, and which constitute a part of this specification, illustrate certain embodiments of the invention and, together with the detailed description, serve to explain the principles of the present invention.

### BRIEF DESCRIPTION OF THE DRAWINGS

In order to assist the understanding of embodiments of the invention, reference will now be made to the appended drawings, in which like reference numerals refer to like elements and which are not necessarily drawn to scale. The drawings are exemplary only, and should not be construed as limiting the invention.
Fig. 1 is an exploded perspective view of a smoking article having the form of a cigarette, showing the smokable material, the wrapping material components, and the filter element of the cigarette;
Fig. 2 is a cross-sectional side view of a cigarette wherein the filter element comprises an adsorbent material positioned within a compartment therein;
Fig. 3 is a cross-sectional side view of a cigarette wherein the filter element comprises a compartment divided by a semi-permeable barrier into a hollow portion and a portion containing an adsorbent material;
Fig. 4 is a cross-sectional side view of a cigarette wherein the filter element includes an adsorbent-containing section and at least one channel adapted for passage of mainstream smoke directly from the tobacco rod to the adsorbent-containing portion of the filter;
Fig. 5 is a cross-sectional view of the section of the filter element of Fig. 4 taken along line A-A;
Fig. 6 is a cross-sectional view of a section of the filter element illustrating an alternative channel configuration;
Fig. 7 is a cross-sectional view of a section of the filter element illustrating another alternative channel configuration;
Fig. 8 is a cross-sectional side view of a cigarette wherein the filter element includes a compartment divided by a semi-permeable barrier, wherein one compartment of the divided compartment contains an adsorbent and the second compartment contains an ion-exchange resin;
Fig. 9 is a cross-sectional side view of a cigarette wherein the filter element includes an ion-exchange resin dispersed within a section of filter material; and
Fig. 10 is a cross-sectional side view of a cigarette of the invention wherein the filter element comprises an adsorbent-filled compartment and a breakable capsule contained within the mouth end section of filter material.

### DETAILED DESCRIPTION OF THE PREFERRED EMBODIMENTS

The present invention now will be described more fully hereinafter. This invention may, however, be embodied in many different forms and should not be construed as limited to the embodiments set forth herein; rather, these embodiments are provided so that this disclosure will be thorough and complete, and will fully convey the scope of the invention to those skilled in the art. It must be noted that, as used in this specification, the singular forms "a," "an," and "the" include plural referents unless the context clearly dictates otherwise.

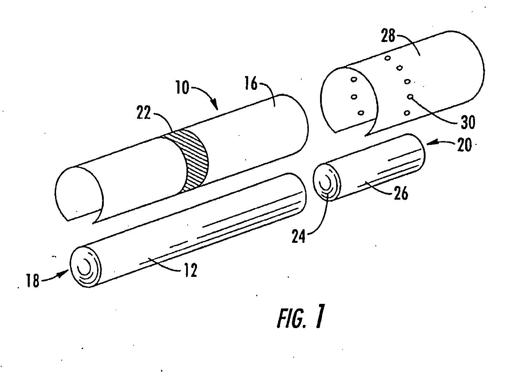

The present invention is directed to filter elements adapted for use in filtering mainstream smoke generated by smoking articles, such as cigarettes, wherein the filter elements contain at least one adsorbent material. Referring to Fig. 1, a smoking article 10 in the form of a cigarette is shown. The cigarette 10 includes a generally cylindrical rod 12 of a charge or roll of smokable filler material contained in a circumscribing wrapping material **16.** The rod **12** is conventionally referred to as a "tobacco rod". The ends of the tobacco rod are open to expose the smokable filler material. One end of the tobacco rod **12** is the lighting end **18** and a filter element **20** is positioned at the other end. The cigarette **10** is shown as having one optional printed band **22** on wrapping material **16,** and that band circumscribes the cigarette rod in a direction transverse to the longitudinal axis of the cigarette. That is, the band provides a cross-directional region relative to the longitudinal axis of the cigarette. The band can be printed on the inner surface of the wrapping material (i.e., facing the smokable filler material) or on the outer surface of the wrapping material. Although the cigarette shown in Fig. 1 possesses wrapping material having one optional band, the cigarette also can possess wrapping material having further optional spaced bands numbering two, three, or more.

The cigarette **10** includes a filter element **20** positioned adjacent one end of the tobacco rod **12** such that the filter element and tobacco rod are axially aligned in an end-to-end relationship, preferably abutting one another. Filter element **20** has a generally cylindrical shape, and the diameter thereof is essentially equal to the diameter of the tobacco rod. The ends of the filter element **20** are open to permit the passage of air and smoke therethrough. The filter element **20** includes at least one segment or section of filter material **24** (e.g., plasticized cellulose acetate tow) that is overwrapped along the longitudinally extending surface thereof with circumscribing plug wrap material **26.** A typical plug wrap material **26** is a paper material, such as a paper that is porous or nonporous to air flow. The filter element **20** can have two or more segments of filter material, and/or flavor additives incorporated therein.

The filter element **20** is attached to the tobacco rod **12** by tipping material **28,** which circumscribes both the entire length of the filter element and an adjacent region of the tobacco rod. The inner surface of the tipping material **28** is fixedly secured to the outer surface of the plug wrap **26** and the outer surface of the wrapping material **16** of the tobacco rod using a suitable adhesive. A ventilated or air diluted smoking article is provided with an air dilution means, such as a series of perforations **30,** each of which extend through the tipping material **28** and plug wrap **26.** When air diluted, the filter element normally is ventilated to provide a cigarette having an air dilution between about 10 and about 75 percent, preferably about 30 to about 40 percent. As used herein, the term "air dilution" is the ratio (expressed as a percentage) of the volume of air drawn through the air dilution means to the total volume of air and smoke drawn through the cigarette and exiting the extreme mouth end portion of the cigarette. See, Selke, et al., Beitr. Zur Tabak. In., Vol. 4, p. 193 (1978). The perforations **30** can be made by various techniques known to those of ordinary skill in the art. For example, the perforations **30** can be made using mechanical or microlaser offline techniques or using online laser perforation.

Preferred cigarettes of the present invention exhibit desirable resistance to draw. For example, an exemplary cigarette exhibits a pressure drop of between about 50 and about 200 mm water pressure drop at 17.5 cc/sec air flow. Preferred cigarettes exhibit pressure drop values of between about 60 mm and about 180 mm, more preferably between about 70 mm to about 150 mm, water pressure drop at 17.5 cc/sec, air flow. Typically, pressure drop values of cigarettes are measured using a Filtrona Filter Test Station (CTS Series) available from Filtrona Instruments and Automation Ltd or a Quality Test Module (QTM) available from the Cerulean Division of Molins, PLC.

The dimensions of a representative cigarette **10** can vary. Preferred cigarettes are rod shaped and have circumferences of about 17 mm to about 27 mm. The total length of the cigarette **10** is typically about 80 mm to about 150 mm.

The length of the filter element **20** can vary. Typical filter elements can have lengths of about 15 mm to about 65 mm, frequently about 25 to about 50 mm. The tipping paper **28** will typically circumscribe the entire filter element **20** and about 4 mm of the length of the tobacco rod **12** in the region adjacent to the filter element.

The wrapping materials used to circumferentially wrap the tobacco rod can vary. Preferably, the wrapping material is a paper material, such as the type of paper material typically used in cigarette manufacture. The wrapping material can have a wide range of compositions and properties. The selection of a particular wrapping material will be readily apparent to those skilled in the art of cigarette design and manufacture. Smokable rods can have one layer of wrapping material; or smokable rods can have more than one layer of circumscribing wrapping material, such as is the case for the so-called "double wrap" smokable rods. The wrapping material can be composed of materials, or be suitably treated, in order that the wrapping material does not experience a visible staining as a result of contact with components of the smokable material (e.g., aerosol forming material). Exemplary types of wrapping materials, wrapping material components and treated wrapping materials are described in US Pat. Nos. 5,105,838 to White et al.; 5,271,419 to Arzonico et al. and 5,220,930 to Gentry; PCT WO 01/08514 to Fournier et al.; PCT WO 03/043450 to Hajaligol et al.; US Pat. Application 2003/0114298 to Woodhead et al.; US Pat. Application 2003/0131860 to Ashcraft et al.; and US Pat. Application Serial Nos. 10/324,418, filed December 20, 2002 (U.S. Pat. App. 2004/0118417); 10/440,290, filed May 16, 2003; and 10/645,996, filed Aug. 12, 2003 (U.S. Pat. App. 2004/0129281). Representative wrapping materials are commercially available as R. J. Reynolds Tobacco Company Grades 119, 170, 419, 453, 454, 456, 465, 466, 490, 525, 535, 557, 652, 664, 672, 676 and 680 from Schweitzer-Maudit International. The porosity of the wrapping material can vary, and frequently is between about 5 CORESTA units and about 100 CORESTA units, often is between about 10 CORESTA units and about 90 CORESTA units, and frequently is between about 20 CORESTA units and about 80 CORESTA units.

The wrapping material typically incorporates a fibrous material and at least one filler material imbedded or dispersed within the fibrous material. The fibrous material can vary. Most preferably, the fibrous material is a cellulosic material. Preferably, the filler material has the form of essentially water insoluble particles. Additionally, the filler material normally incorporates inorganic components. The filler material may comprise catalysts or adsorbent materials capable of adsorbing or reacting with vapor phase components of mainstream smoke. Filler materials incorporating calcium salts are particularly preferred. One exemplary filler material has the form of calcium carbonate, and the calcium carbonate most preferably is used in particulate form. See, for example, U.S. Pat. No. 4,805,644 to Hampl; U.S. Pat. No. 5,161,551 to Sanders; and U.S. Pat. No. 5,263,500 to Baldwin et al.; and PCT WO O1/48,316. Other filler materials include agglomerated calcium carbonate particles, calcium tartrate particles, magnesium oxide particles, magnesium hydroxide gels; magnesium carbonate-type materials, clays, diatomaceous earth materials, titanium dioxide particles, gamma alumina materials and calcium sulfate particles. The filler can be selected so as to impart certain beneficial characteristics to the wrapping material, such as modification of combustion properties or the ability to adjust the character and content of mainstream smoke (e.g., by adsorption of certain compounds).

The production of filter rods, filter rod segments and filter elements, and the manufacture of cigarettes from those filter rods, filter rod segments and filter elements, can be carried out using the types of equipment known in the art for such uses. Multi-segment cigarette filter rods can be manufactured using a cigarette filter rod making device available under the brand name Mulfi from Hauni-Werke Korber & Co. KG. Six-up rods, four-up filter rods and two-up rods that are conventionally used for the manufacture of filtered cigarettes can be handled using conventional-type or suitably modified cigarette rod handling devices, such as tipping devices available as Lab MAX, MAX, MAX S or MAX 80 from Hauni-Werke Korber & Co. KG. See, for example, the types of devices set forth in US Pat. Nos. 3,308,600 to Erdmann et al.; 4,281,670 to Heitmann et al.; 4,280,187 to Reuland et al.; and 6,229,115 to Vos et al.

Tobacco materials useful for carrying out the present invention can vary. Tobacco materials can be derived from various types of tobacco, such as flue-cured tobacco, burley tobacco, Oriental tobacco or Maryland tobacco, dark tobacco, dark-fired tobacco and *Rustica* tobaccos, as well as other rare or specialty tobaccos, or blends thereof. Descriptions of various types of tobaccos, growing practices, harvesting practices and curing practices are set for in Tobacco Production, Chemistry and Technology, Davis et al. (Eds.) (1999). Most preferably, the tobaccos are those that have been appropriately cured and aged.

Typically, tobacco materials for cigarette manufacture are used in a so-called "blended" form. For example, certain popular tobacco blends, commonly referred to as "American blends," comprise a mixture of flue-cured tobacco, burley tobacco and Oriental tobacco. Such blends, in many cases, contain tobacco materials that have a processed form, such as processed tobacco stems (e.g., cut-rolled or cut-puffed stems), volume expanded tobacco (e.g., puffed tobacco, such as dry ice expanded tobacco (DIET), preferably in cut filler form). Tobacco materials also can have the form of reconstituted tobaccos (e.g., reconstituted tobaccos manufactured using paper-making type or cast sheet type processes). The precise amount of each type of tobacco within a tobacco blend used for the manufacture of a particular cigarette brand varies from brand to brand. See, for example, Tobacco Encyclopedia, Voges (Ed.) p. 44-45 (1984), Browne, The Design of Cigarettes, 3rd Ed., p.43 (1990) and Tobacco Production, Chemistry and Technology, Davis et al. (Eds.) p. 346 (1999). Various representative tobacco types, processed types of tobaccos, types of tobacco blends, cigarette components and cigarette configurations are set forth in U.S. Pat. Nos. 4,836,224 to Lawson et al.; 4,924,888 to Perfetti et al.; 5,056,537 to Brown et al.; 5,159,942 to Brinkley et al.; 5,220,930 to Gentry; and 5,360,023 to Blakley et al.; US Pat. Applications 2002/0000235 to Shafer et al.; 2003/0075193 to Li et al.; and 2003/0131859 to Li et al.; PCT WO 02/37990 to Bereman; U.S. Pat. Application Ser. No. 10/285,395, filed October 31, 2002, to Lawson et al. (U.S. Pat. App. 2004/0084056); U.S. Pat. Application Ser. No. 10/463,211, filed June 17, 2003, to Perfetti et al.; and Bombick et al., Fund. Appl. Toxicol., 39, p. 11-17 (1997).

Tobacco materials typically are used in forms, and in manners, that are traditional for the manufacture of smoking articles, such as cigarettes. The tobacco normally is used in cut filler form (e.g., shreds or strands of tobacco filler cut into widths of about 0,25 cm to about 0,04 cm (about 1/10 inch to about 1/60 inch), preferably about 0,13 cm to about 0,07 cm (about 1/20 inch to about 1/35 inch), and in lengths of about 0,63 cm to about 7.62 cm (about 1/4 inch to about 3 inches). The amount of tobacco filler normally used within the tobacco rod of a cigarette ranges from about 0.5 g to about 1 g. The tobacco filler normally is employed so as to fill the tobacco rod at a packing density of about 100 mg/cm³ to about 300 mg/cm³, and often about 150 mg/cm³ to about 275 mg/cm³.

If desired, the tobacco materials of the tobacco rod can further include other components. Other components include casing materials (e.g., sugars, glycerin, cocoa and licorice) and top dressing materials (e.g., flavoring materials, such as menthol). The selection of particular casing and top dressing components is dependent upon factors such as the sensory characteristics that are desired, and the selection of those components will be readily apparent to those skilled in the art of cigarette design and manufacture. See, Gutcho, Tobacco Flavoring Substances and Methods, Noyes Data Corp. (1972) and Leffingwell et al., Tobacco Flavoring for Smoking Products (1972).

One exemplary tobacco blend for use in the present invention comprises about 25 to about 98 weight percent flue-cured tobacco, about 10 to about 30 weight percent burley tobacco, about 10 to about 30 weight percent Oriental tobacco, about 10 to about 30 weight percent reconstituted flue-cured and/or Oriental tobacco leaf, about 10 to about 50 weight percent expanded flue-cured tobacco lamina, optionally about 5 to about 20 weight percent expanded flue-cured tobacco stems, and about 2 to about 8 weight percent of a casing material. Optionally, the blend may further include about 0.25 to about 2 weight percent of flavors in the form of a top dressing, preferably about 0.5 to about 1.5 weight percent. A preferred top dressing composition comprises of flavors with vapor pressures not exceeding about 2.0 mm Hg. at 40°C.

In a preferred embodiment, the tobacco blend comprises about 25 to about 70 weight percent flue-cured tobacco, about 12 to about 20 weight percent burley tobacco, about 15 to about 20 weight percent Oriental tobacco, about 15 to about 20 weight percent reconstituted flue-cured and/or Oriental tobacco leaf, about 20 to about 30 weight percent expanded flue-cured tobacco lamina, optionally about 10 to about 15 weight percent expanded flue-cured tobacco stems, and a casing material in an amount of about 3 to about 5 weight percent.

The casing material preferably includes various flavoring ingredients known in the art, such as cocoa, licorice, various sugars, and glycerin. In one embodiment, the casing material includes components derived or extracted from a fig plant (e.g., Fig Supreme Flavor available from Bell Flavors, Inc.). One exemplary casing composition is disclosed in U.S. Patent No. 5,360,023 to Blakley et al*.*

The level of "tar" and nicotine delivered by the cigarettes of the invention will vary. Typically, the cigarettes of the invention will deliver the "tar" and nicotine amounts described in U.S. Patent No. 4,836,224. Cigarettes of this invention generally deliver from about 0.2 mg to about 3.5 mg, frequently from about 0.3 mg to about 2.5 mg, more frequently from about 0.6 mg to about 1.2 mg of nicotine when smoked under FTC smoking conditions. Cigarettes of this invention generally deliver from about 0.5 to about 18 mg, frequently from about 3 to about 13 mg, more frequently about 5 to about 11 mg "tar" when smoked under FTC smoking conditions.

In one embodiment, the tobacco blend includes a mixture of C3-C20 organic acids, typically C3-C12 organic acids, such as levulinic acid, pyruvic acid, and lactic acid. The mixture preferably includes levulinic acid and one or more additional C3-C6 organic acids. An exemplary organic acid mixture comprises levulinic, pyruvic acid and lactic acid in a 1:1:1 ratio by weight. The amount of organic acid added to the cigarette preferably provides a ratio of organic acid to nicotine on a mole basis of about 1:1 to about 3:1; more preferably about 1.5:1 to about 2.5:1. In one preferred embodiment, the ratio of moles of organic acid to moles of nicotine is about 2:1. The organic acids can be added as part of a casing or top dressing composition, or can be added to one or more of the tobacco components of the tobacco blend prior to blending. For example, the organic acids can be added to the aqueous extract formed during manufacture of a reconstituted tobacco sheet.

The tobacco blend may contain an aerosol forming material. The aerosol forming material can vary, and mixtures of various aerosol forming materials can be used. Representative types of aerosol forming materials are set forth in US Pat. Nos. 4,793,365 to Sensabaugh, Jr. et al.; and 5,101,839 to Jakob et al.; PCT WO 98/57556 to Biggs et al.; and Chemical and Biological Studies on New Cigarette Prototypes that Heat Instead of Burn Tobacco, R. J. Reynolds Tobacco Company Monograph (1988). A preferred aerosol forming material produces a visible aerosol upon the application of sufficient heat thereto, and a highly preferred aerosol forming material produces an aerosol that can be considered to be "smoke-like." A preferred aerosol forming material is chemically simple, relative to the chemical nature of the smoke produced by burning tobacco. A highly preferred aerosol forming material is a polyol, such as glycerin.

The amount of aerosol forming material employed relative to the dry weight of smokable material present in a smokable rod can vary. For a smokable rod, the amount of aerosol forming material present in that rod is more than about 2 percent, and generally is more than about 3 percent, of the combined dry weight of the aerosol forming material and tobacco material within that rod. For a preferred smokable rod, the amount of aerosol forming material present in that rod typically is at least about 5 percent, generally is at least about 10 percent, often is at least about 15 percent, frequently is at least about 20 percent, and even can be at least about 25 percent, of the combined dry weight of the aerosol forming material and tobacco material within that rod. For a preferred smokable rod, the amount of aerosol forming material present in that rod typically does not exceed about 65 percent, generally does not exceed about 60 percent, often does not exceed about 55 percent, and frequently does not exceed about 50 percent, of the combined dry weight of the aerosol forming material and tobacco material in that rod. Smokable materials possessing exceedingly high levels of aerosol forming material typically are difficult to process into cigarette rods using conventional types of automated cigarette manufacturing equipment.

Cast sheet types of smokable materials typically can incorporate relatively high levels aerosol forming material. Reconstituted tobaccos manufactured using paper-making types of processes typically can incorporate moderate levels of aerosol forming material. Tobacco strip and tobacco cut fuller can incorporate lower amounts of aerosol forming material. For processed materials, such as cast sheet materials and paper-type reconstituted tobaccos, tobacco pulp materials that are extracted with aqueous liquids can be used as components thereof. The removal of essentially all or some fraction of the water soluble components of tobacco can assist in providing a processed material that is capable of acting as an effective substrate for higher levels of aerosol forming material. In addition, dusting processed materials with dry tobacco powders can assist in providing processed materials having relatively high levels of glycerin while not demonstrating overly tacky or sticky characteristics. Cast sheet materials, and particularly cast sheet materials incorporating certain amounts of tobacco pulp materials that have extracted with water, often can comprise up to about 65 percent, often up to about 60 percent, and frequently up to about 55 percent, aerosol forming material, based on the dry weight of the tobacco and aerosol forming material in the material so produced. Paper-type reconstituted tobacco materials, and particularly those materials incorporating certain amounts of tobacco pulp materials that have extracted with water, and not reapplying some or all of the water soluble extract components back to that pulp, often can comprise up to about 55 percent, often up to about 50 percent, and frequently up to about 45 percent, aerosol forming material, based on the dry weight of the tobacco and aerosol forming material in the material so produced. A material produced by spraying tobacco strip or cut filler with aerosol forming material often does not comprise more than about 20 percent, and frequently does not comprise more than about 15 percent, aerosol forming material, based on the dry weight of the tobacco and aerosol forming material of the material so produced.

Other types of materials incorporating relatively high levels of aerosol forming material can be incorporated into a smokable material blend. Formed, encapsulated or microencapsulated materials can be employed. Such types of materials are composed primarily of aerosol forming material, and those materials can incorporate some amount and form of tobacco. An example of such a type of material is a film produced by casting and drying an aqueous solution of about 70 weight parts glycerin and about 30 weight parts binder (e.g., citrus pectin, ammonium alginate, sodium alginate or guar gum), and then surface coating that film with about 2 weight parts of a finely divided powder that is provided by milling tobacco lamina.

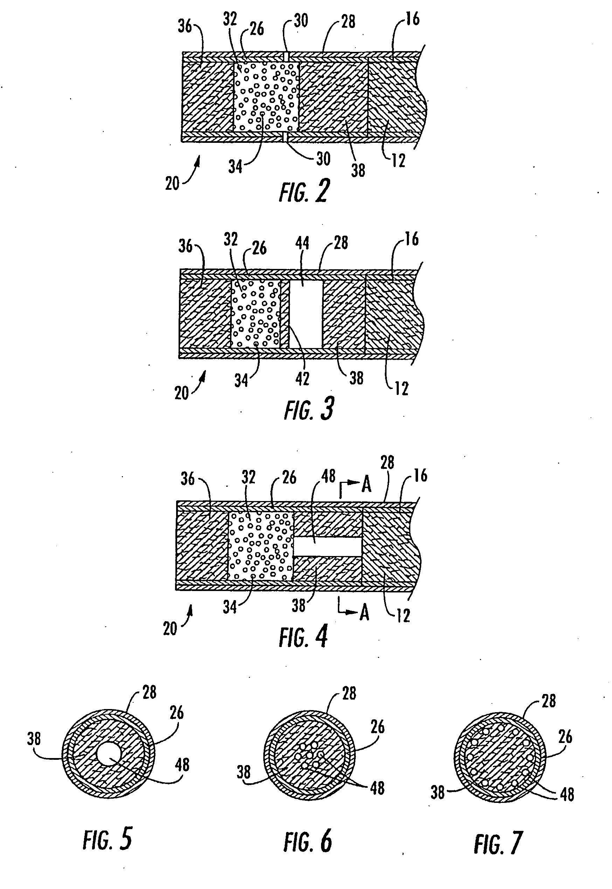

Figures 2-10 illustrate various embodiments of the filter element, which is adapted for use with smoking articles such as cigarettes. The filter element of the invention typically comprises multiple longitudinally extending segments. Each segment can have varying properties and may include various materials capable of filtration or adsorption of particulate matter and/or vapor phase compounds. Typically, the filter element of the invention includes 2 to 6 segments, frequently 2 to 4 segments. In one preferred embodiment, the filter element includes a mouth end segment, a tobacco end segment and a compartment therebetween. This filter arrangement is sometimes referred to as a "compartment filter" or a "plug/space/plug" filter. The compartment may be divided into two or more compartments as described in greater detail below.

In each embodiment shown, at least one substance **34** capable of removing at least one gas phase component of mainstream smoke is incorporated into the filter element. Preferably, the substance is an adsorbent material capable of adsorbing one or more gas phase compounds from the mainstream smoke generated by a smoking article. Exemplary adsorbents **34** include activated carbon, molecular sieves (e.g., zeolites and carbon molecular sieves), clays, activated aluminas, silica gels, and mixtures thereof. The amount of adsorbent **34** within the filter element typically ranges from about 50 to about 250 mg, often about 80 to about 150 mg, and frequently about 90 to about 120 mg.

The form of the adsorbent **34** may vary. Typically, the adsorbent **34** is used in granular or particulate solid form having a particle size of between about 8x16 mesh to about 30x70 mesh using the U.S. sieve system. However, smaller or larger particles could be used without departing from the invention. The terms "granular" and "particulate" are intended to encompass both non-spherical shaped particles and spherical particles, such as so-called "beaded carbon" described in WO 03/059096 A1.

The manner in which the adsorbent **34** is incorporated into the filter element may vary. As shown in the appended drawings, granulated adsorbent can be placed in a compartment within the filter element. However, the adsorbent **34** could also be imbedded or dispersed within a section of filter material, such as a fibrous filter material (e.g., cellulose acetate tow), or incorporated into a paper, such as the carbon-containing gathered paper described in U.S. Patent No. 5,360,023 to Blakley et al. In addition, an adsorbent material **34** can be placed both in a compartment and imbedded in one or more of the sections of filter material, and the adsorbent material in the compartment and the adsorbent imbedded or dispersed in the filter material can be the same or different.

In one preferred embodiment, the adsorbent is activated carbon. The level of activity of the carbon may vary. Typically, the carbon has an activity of about 60 to about 150 Carbon Tetrachloride Activity (i.e., weight percent pickup of carbon tetrachloride). Activated carbon most useful herein consists primarily of carbon, and preferably has a carbon content above about 80 weight percent, and more preferably above about 90 weight percent. Preferred carbonaceous materials are provided by carbonizing or pyrolyzing bituminous coal, tobacco material, softwood pulp, hardwood pulp, coconut shells, almond shells, grape seeds, walnut shells, macadamia shells, kapok fibers, cotton fibers, cotton linters, and the like. Carbon from almond shells, grape seeds, walnut shells, and macadamia nut shells are particularly preferred and are believed to provide greater vapor phase removal of certain compounds as compared to coconut shell carbon. Examples of suitable carbonaceous materials are activated coconut hull based carbons available from Calgon Corp. as PCB and GRC-11, coal-based carbons available from Calgon Corp. as S-Sorb, BPL, CRC-11F, FCA and SGL, wood-based carbons available from Westvaco as WV-B, SA-20 and BSA-20, carbonaceous materials available from Calgon Corp. as HMC, ASC/GR- 1 and SC II, and Witco Carbon No. 637. Other carbonaceous materials are described in U.S. Pat. Nos. 4,771,795 to White, et al. and 5,027,837 to Clearman, et al.; and European Patent Application Nos. 236,922; 419,733 and 419,981. Certain carbonaceous materials can be impregnated with substances, such as transition metals (e.g., silver, gold, copper, platinum, and palladium), potassium bicarbonate, tobacco extracts, polyethyleneimine, manganese dioxide, eugenol, and 4-ketononanoic acid. The carbon composition may also include one or more fillers, such as semolina. Grape seed extracts may also be incorporated into the filter element **20** as a free radical scavenger.

Figure 2 illustrates one embodiment of the filter element **20** comprising a first section of filter material **36,** such as a fibrous filter material (e.g., plasticize cellulose acetate tow) and a second section of filter material **38** spaced apart from the first section of filter material. As shown, the first section of filter material **36** is positioned at the mouth end of the filter element **20** and the second section of filter material **38** is positioned proximal to the tobacco rod **12.** The space between the first section of filter material **36** and the second section of filter material **38** define a compartment **32.** At least a portion of the compartment **32** contains an adsorbent material **34,** preferably in granular form. Typically, substantially the entire compartment **32** contains adsorbent **34.**

As shown, the filter element **20** includes ventilation holes **30** that extend through the tipping paper **28** and the plug wrap **26** and, thus, provide air dilution of mainstream smoke. In this embodiment, the ventilation holes **30** are positioned between the approximate midpoint of the adsorbent-containing portion of the compartment **32** and the end of the filter element **20** proximal to the tobacco rod **12.** Preferably, ventilation holes **30** are in a position overlying the compartment **32** and preferably positioned between the midpoint of compartment **32** and the end of the compartment adjacent to the second section of filter material **38** upstream from the compartment. Positioning the ventilation holes **30** upstream of at least a portion of the adsorbent-containing compartment **32** can enhance adsorption of certain vapor phase components of mainstream smoke by the adsorbent **34.**

The ventilation holes **30** may be configured as a single line of perforations extending circumferentially around the filter element **20** or may comprise several lines of perforations. As would be understood, the exact count and size of the ventilation holes **30** will vary depending on the desired level of air dilution.

The exact distance of the ventilation holes **30** from the end of the filter element **20** proximal to the tobacco rod **12** will vary depending on the length of the individual segments of the filter, such as the segment **38** proximal to the tobacco rod. In certain embodiments, the ventilation holes **30** are about 10 to about 22 mm from the tobacco rod **12,** and typically, when the ventilation holes are overlying the adsorbent-containing compartment **32,** the holes are within about 5 mm of the section of filter material **38** proximal to the tobacco rod, preferably within about 2 mm.

In another embodiment of the filter element shown in Fig. 3, the filter element **20** includes a semi-permeable barrier **42** dividing the compartment **32** into two sections or regions. Similar to the embodiment shown in Fig. 2, at least a portion of the compartment **32** is filled with an adsorbent **34.** The section of the compartment **32** containing the adsorbent is the downstream section of the compartment. The portion of the compartment **32** upstream of the barrier **42** is hollow. The hollow section **44** of the compartment **32** can provide a mixing region for the mainstream smoke prior to entry of the smoke into the adsorbent material, which can contribute to vapor phase removal by the adsorbent **34**.

Figure 4 illustrates yet another embodiment of the filter element **20**. As shown, similar to the embodiment shown in Fig. 2 and Fig. 3, a compartment **32** positioned between a mouth end section of filter material **36** and a tobacco end section of filter material **38** is filled with an adsorbent material **34.** The section of filter material **38** proximal to the tobacco rod **12** comprises one or more channels extending therethrough, the channel providing a passageway for mainstream smoke passing through the section of filter material **38.** The one or more channels **48** provide an unimpeded pathway for mainstream smoke to exit the tobacco rod **12** and enter the compartment **32** containing the adsorbent **34.**

Figures 5-7 illustrate various exemplary configurations for the one or more channels **48** extending through the filter section **38.** Figures 5 is a cross-sectional view taken along line **A-A** in Fig. 4. As shown in Fig. 5, the filter element may include a single channel **48** extending along, for example, the central axis of the section of filter material **38.** Alternatively, as shown in Figs. 6 and 7, a plurality of smaller channels **48** may be utilized, although the exact placement and configuration of the multiple channels may vary. However, as shown in Fig. 6, one preferred configuration involves placement of a plurality of channels **48** proximal to the central axis of the filter section **38.** In an alternative embodiment shown in Fig. 7, the plurality of channels **48** are positioned along the periphery of the filter section **38.** In one embodiment, the number of channels **48** is 1 to about 20, preferably 1 to about 15, more preferably 1 to about 10 (e.g., 1, 2, 3, 4, 5, 6, 7, 8, 9, or 10 channels).

The walls of the channel or channels **48** may be defined by the material of the section of filter material **38** or the channels can be formed using tubes (not shown) inserted into the filter material. If tubes are used, the tubes may comprise cellulose acetate, polyethylene, or any other polymeric material capable of forming a self-supporting structure.

The total cross-sectional area of the one or more channels **48** can vary. Typically, the total cross-sectional area of the channel or channels **48** is about 0.1 to about 50 mm², frequently about 0.5 to about 15 mm². The cross-sectional shape of the channels **48** is not critical to the invention and may be, for example, rectangular or circular. The diameter of each channel or tube can vary. Typically, the diameter of each channel or tube is about 0.5 to about 8 mm, frequently about 1 to about 3 mm. The diameter of the channel or tube is selected so as to prevent migration of the adsorbent into the channel or tube (i.e., the diameter of the channel or tube is smaller than the diameter of the adsorbent particles).

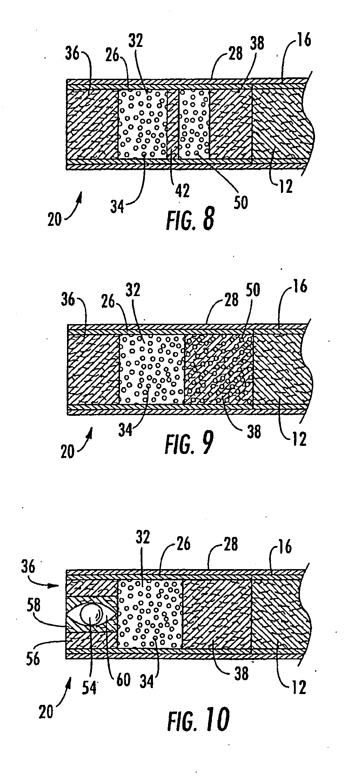

Figure 8 illustrates an embodiment of the filter element **20** similar to the embodiment illustrated in Fig. 3. As in Fig. 3, the filter element shown in Fig. 8 includes a compartment **32** divided into two sections by a semi-permeable barrier **42.** The compartment of the divided compartment **32** downstream from the semi-permeable barrier **42** contains an adsorbent **34.** The upstream compartment of the compartment **32** contains an ion-exchange resin **50.** Alternatively, although not shown, the present invention further includes embodiments wherein the ion-exchange resin **50** is placed in the downstream compartment of the compartment **32** and the adsorbent **34** is placed in the upstream compartment of the compartment. That is to say, the relative placement of the adsorbent material **34** and the ion-exchange resin **50** may vary in the present invention. In yet another embodiment, the adsorbent **34,** such as activated carbon, and the ion-exchange resin **50** can be mixed together and placed in the compartment **32** without physically separating the two materials.

In an alternative embodiment similar to the embodiment shown in Fig. 8, Fig. 9 illustrates an embodiment wherein the ion-exchange resin **50** is dispersed or imbedded within a section of filter material **38** rather than in a portion of the compartment **32.** As noted above, the relative placement of the ion-exchange resin **50** and the adsorbent **34** may vary. As a result, the particles of the ion-exchange resin **50** could alternatively be dispersed within the mouth end section of filter material **36** or both sections of filter material.

The ion-exchange resin **50** can comprise any polymer having active groups in the form of electrically charged sites capable of displacement upon interaction with ions of opposite charge. Typically, the ion-exchange resin **50** comprises a polymer backbone, such as styrene-divinylbenzene (DVB) copolymers, acrylates, methacrylates, phenol formaldehyde condensates, and epichlorohydrin amine condensates, and a plurality of electrically charged functional groups attached to the polymer backbone. The ion-exchange resin **50** is preferably a weak base anion exchange resin or a strong base anion exchange resin. Exemplary resins include DIAION® ion-exchange resins available from Mitsubishi Chemical Corp. (e.g., WA30 and DCA11) and DUOLITE® ion-exchange resins available from Rohm and Haas (e.g., DUOLITE® A7).

The form of the ion-exchange resin **50** can vary. Generally, the ion-exchange resin **50** will be in solid particulate form having a particle size of between about 8x16 mesh to about 30x70 mesh using the U.S. sieve system.

An embodiment of the filter element **20** of the invention is illustrated in Fig. 10. As shown, this embodiment also includes a compartment **32** between two sections of filter material, **36** and **38.** The compartment **32** contains an adsorbent **34.** The mouth end section of filter material **36** comprises at least one breakable capsule **54** contained therein. The capsule **54** can be simply imbedded in the filter material **36.** In the embodiment shown in Fig. 10, the section of filter material **36** comprises an annular outer section **56** and an inner portion **58** that includes a compartment **60** therein adapted for receiving the breakable capsule **54.** As shown, one or both ends of the inner portion **58** of the filter material **36** may be crimped to retain the breakable capsule **54** within the filter element **20.** Each breakable capsule **54** carries a payload incorporating a compound that is intended to introduce some change to the nature or character of mainstream smoke drawn through that filter element (e.g., a flavoring agent). The smoker may selectively rupture the capsule **54** in order to release the flavoring agent. It is believed that the use of a breakable capsule **54** containing a flavoring agent downstream of the adsorbent material **34** will provide the smoker with the ability to compliment taste attributes of the smoking article. Since the flavoring agent contained in the capsule **54** is downstream of the adsorbent **34,** there is minimal interaction with the adsorbent material. The filter element shown in Fig. 10 having a breakable capsule **54** therein can be manufactured as described in copending U.S. Patent Application No. 10/600,712, filed June 23, 2003.

The tipping material **28** connecting the filter element **20** to the tobacco rod **12** can have indicia (not shown) printed thereon. For example, a band (not shown) can indicate to a smoker the general location or position of the capsule **54** within the filter element **20.** These indicia may help the smoker to locate the capsule **54** so that it can be more easily ruptured by squeezing the filter element **20** directly outside the position of the capsule. The indicia on the tipping material **28** may also indicate the nature of the payload carried by the capsule **54.** For example, the indicia may indicate that the particular payload is a spearmint flavoring by having a particular color, shape, or design.

If desired, the smoker may rupture the capsule **54** at any time before, during, or even after, the smoking experience. Breakage of the capsule **54** acts to release the contents that are contained and sealed therein. Release of the contents of the capsule **54** into the filter element **20** thus enables the smoker to achieve the intended benefit of action of certain of those contents, whether that benefit results from flavoring or scenting the smoke, cooling or moistening the smoke, freshening the scent of the cigarette butt, or achieving some other goal associated with modifying the overall composition of the smoke or altering the performance characteristics of the cigarette. That is, in highly preferred embodiments, a portion of the payload (e.g., portions of a flavoring agent) that has been released into the filter element **20** is incorporated into each subsequent puff of mainstream smoke that is received through that filter element.

Application of tactile pressure to the capsule **54,** for example by a squeezing action provided by the fingers of the smoker to the filter element **20,** causes relevant regions of the filter element to deform and hence causes the capsule to rupture and release its payload to the compartment interior **60** of the filter element. The rupture of the capsule **54** can be discerned by an audible pop, snap, or a rapid decrease in the resistance to the pressure applied by the smoker. Rupture of the capsule **54** causes contents of its payload to disperse throughout the compartment **60** and throughout the filter tow material in the outer annular filter section **56.** Most preferably, the overall cylindrical shape of the filter element **20** returns to essentially its original shape after the application of pressure to the filter element is ceased.

The compartment **60** that houses the capsule **54** preferably possesses a generally circular and/or conical cross-sectional shape and has a diameter of about 3 mm to about 4 mm at its widest point. However, the walls of the compartment **60** may be defined by compressible and deformable material (e.g., plasticized cellulose acetate), and the compartment may be manufactured so as to have a greater or smaller diameter. Accordingly, the compartment **60** may accept one or more capsules **54** having diameters of at least about 1 mm, typically at least about 2 mm, and often at least about 3 mm. Typically, the capsules **54** have diameters that do not exceed about 6 mm, often do not exceed about 5 mm, and frequently do not exceed about 4.5 mm. Certain preferred capsules **54** have diameters in the range of about 3 mm to about 4 mm in diameter, and certain highly preferred capsules are approximately 3.5 mm in diameter.

The capsule **54** is generally spherical in shape and possesses a rigid outer shell, such as a gelatin outer shell, that surrounds an internal payload. Suitable capsules are commercially available from Mane Aromatic Flavors, located in Nice, France as gelatin encapsulated mixtures of medium chain triglycerides and flavor agents. The designations of a number of flavor capsules that are available from Mane Aromatic Flavors are: Spearmint, E209123; Cinnamon, E0303392; Russian Tea, E0303386; Lemon, E127382; and Menthol, E127384. Such representative capsules 54 have diameters of about 3.5 mm and about 4 mm.

The outer shell of the capsule **54** is preferably constructed of a food grade gelatin derived from bovine, picine or porcine stock. A wide variety of gelatins may be used, and the selection of a gelatin for the capsule outer surface is considered a matter of design choice to those of ordinary skill in the art. See, Kirk-Othmer, Encyclopedia of Chemical Technology, (4th Ed.) 12, 406-416 (1994). The type of gelatin used for constructing the outer shell of the capsule provides that capsule with the capability of being exposed to triacetin (a common plasticizer used in cigarette filter manufacture) or 1,2 propylene glycol (a common tobacco casing component) for relatively long periods of time without experiencing undesirable interaction (e.g., dissolution of the gelatin therein). Because the gelatins used in the preferred embodiments may dissolve in water over extended periods of time, it is desirable to employ virtually anhydrous payloads (or payloads possessing very low amounts of water) with capsules having gelatin outer coatings.

The capsule payload can have a form that can vary; and typically, the payload has the form of a liquid, a gel, or a solid (e.g., a crystalline material or a dry powder). The payload can incorporate components that aid in flavoring or scenting mainstream cigarette smoke. Alternatively, the payload may be a breath freshening agent for the smoker, a deodorizing agent for the cigarette butt, a moistening or cooling agent for the cigarette smoke, or a composition capable of otherwise altering the nature or character of the cigarette.

In the preferred embodiment, the payload is a mixture of a flavoring and a diluting agent or carrier. The preferred diluting agent is a triglyceride, such as a medium chain trigiyceride, and more particularly a food grade mixture of medium chain triglycerides. See, for example, Radzuan et al., Porim Bulletin, 39, 33-38 (1999). Flavorings of the payload may be natural or synthetic, and the character of these flavors can be described, without limitation, as fresh, sweet, herbal, confectionary, floral, fruity or spice. Specific types of flavors include, but are not limited to, vanilla, coffee, chocolate, cream, mint, spearmint, menthol, peppermint, wintergreen, lavender, cardamon, nutmeg, cinnamon, clove, cascarilla, sandalwood, honey, jasmine, ginger, anise, sage, licorice, lemon, orange, apple, peach, lime, cherry, and strawberry. See also, Leffingwill et al., Tobacco Flavoring for Smoking Products, R. J. Reynolds Tobacco Company (1972). Flavorings also can include components that are considered moistening, cooling or smoothening agents, such as eucalyptus. These flavors may be provided neat (i.e., alone) or in a composite (e.g., spearmint and menthol, or orange and cinnamon). Composite flavors may be combined in a single capsule as a mixture, or as components of multiple capsules positioned within the filter element.

The amount of flavoring and diluting agent within the capsule **54** may vary. In some instances, the diluting agent may be eliminated altogether, and the entire payload can be composed of flavoring agent. Alternatively, the payload can be almost entirely comprised of diluting agent, and only contain a very small amount of relatively potent flavoring agent. In the preferred embodiment using a capsule of approximately 3.5 mm in diameter, the weight of the liquid payload (e.g., flavoring agent and diluting agent) is preferably in the range of about 15 mg to about 25 mg, and more preferably in the range of about 20 mg to about 22 mg. The preferred composition of the mixture of flavoring and diluting agent is in the range of about 5 percent to about 25 percent flavoring, and more preferably in the range of about 10 to about 15 percent flavoring, by weight based on the total weight of the payload, with the balance being diluting agent.

The above filter element **20** embodiments are not mutually exclusive, meaning that aspects of more than one filter embodiment may be combined to further enhance the properties of the filter. For example, a filter combining an adsorbent and ion-exchange resin, as shown in Figs. 8-9 can also include the flow channels shown in Fig. 4 and/or a hollow compartment as shown in Fig. 3 and/or a breakable capsule as shown in Fig. 10.

In each embodiment described above, the first section of filter material **36** and the second section of filter material **38** may comprise any filter material capable of filtering particulate matter entrained in mainstream smoke generated by a smoking article. Exemplary filter materials include cellulose acetate tow, gathered cellulose acetate web, polypropylene tow, gathered polypropylene web, gathered polyester web, gathered paper, and strands of reconstituted tobacco. In preferred embodiments, each section of filter material, **36** and **38,** comprises a fibrous filter material, such as cellulose acetate tow.

The sections of filter material, **36** and **38,** may further include a plasticizing component, such as triacetin or carbowax. In one embodiment, the plasticizer component of the filter material comprises triacetin and carbowax in a 1:1 ratio by weight. The total amount of plasticizer is generally about 4 to about 20 percent by weight, preferably about 6 to about 12 percent by weight.

Each section or segment of filter material, **36** and **38,** can vary in length. Typically, each section of filter material is about 5 to about 25 mm in length, frequently about 5 to about 15 mm in length.

The particulate removal efficiency of each segment of filter material in the filter element can vary. For fibrous filter materials, particulate removal efficiency is preferably quantified in terms of weight per unit length of the filaments forming the fibers. Exemplary filter materials exhibit a filtration efficiency of about 1.8 to about 10 denier per filament. Each filter segment in a multi-segment filter element can have the same or different filtration efficiency. In one embodiment, the section of filter material **38** proximal to the tobacco rod **12** has a higher particulate removal efficiency than the section of filter material **36** distal from the tobacco rod. For example, the filaments of the tobacco end section of filter material **38** can have a lower weight per unit length than the filaments of the mouth end section of filter material **36.** Exemplary filaments for use in the tobacco end section of filter material **38** have a weight per unit length of less than about 2.5 denier per filament, preferably about 1.8 to about 2.5. Exemplary filaments for use in the mouth end section of filter material **36** have a weight per unit length of greater than about 3.0 denier per filament, preferably about 3.0 to about 10.0. Alternatively, the mouth end section of filter material **36** can have higher particulate removal efficiency than the tobacco end section of filter material **38.**

In each of the embodiments described above, the compartment **32** formed between the two sections of filter material, **36** and **38,** has a length of about 5 to about 50 mm, typically about 5 to about 30 mm. In those embodiments wherein the compartment **32** is divided into two compartments, the semi-permeable dividing barrier **42** may be any material that is permeable to mainstream smoke, but impermeable to the adsorbent **34** and thus able to retain the adsorbent in a defined portion of the compartment. Exemplary semi-permeable barriers **42** include highly porous paper (e.g., about 100 CORESTA and above) and any of the materials suitable as the sections of filter material, **36** and **38.**

The length of the barrier **42** will vary. Typically, the barrier **42** will have a length of about 0.5 to about 10 mm, more preferably about 0.5 to about 5 mm. Each compartment of the divided compartment **32** will typically have a length of about 5 to about 20 mm, frequently about 5 to about 10 mm.

If desired, suitable catalytic compounds, e.g., for the conversion of carbon monoxide to carbon dioxide, can be incorporated into one or more segments of the filter element **20.** Exemplary catalysts include noble metals (e.g., silver, gold, platinum), metal oxides, ceramics, and mixtures thereof.

### EXPERIMENTAL

The following examples are provided to illustrate embodiments of the present invention, and should not be considered to limit the scope of the invention or the claims appended hereto. Unless otherwise noted, all parts and percentages are by weight. The cigarettes so described in the examples can be handmade or manufactured by machine using, for example, a Pilot Cigarette Maker from Hauni-Werk Korber & Co. KG.

### Example 1

A cigarette is prepared using a representative American blend comprising about 13 percent burley tobacco, about 20 percent flue-cured tobacco, about 17 percent reconstituted tobacco material, and about 17 percent Oriental tobacco. About 3 percent of an aqueous casing material, comprising humectants and flavors, is applied to the tobacco blend prior to cutting into filler form. About 30 percent expanded, composed of primarily flue-cured tobacco, is then added to the cut tobacco blend to prepare the final cut filler. The blend is equilibrated to final moisture content of about 13 percent prior to cigarette manufacture.

The tobacco blend is used to prepare a cigarette having a length of about 84 mm. The tobacco rod length is about 57 mm and the filter element length is about 27 mm. The tobacco rod includes a charge of tobacco cut filler weighing about 0.600 g contained in a circumscribing cigarette paper wrap of the type that is available as No. 456 from Tervakoski. The tipping material circumscribes the length of the filter element and extends about 4 mm down the length of the tobacco rod.

The filter element of the cigarette has the general configuration as shown in Figure 2. Filter elements of this general type are available from Baumgartner Inc., Switzerland. The cigarette has a filter element comprising a 12 mm mouth-end cellulose acetate tow (2.5 denier per filament / 35,000 total denier) segment with 7% triacetin, a 7 mm compartment filled with granular carbon available as G277 (85 carbon tetrachloride activity and size 20x50 mesh) from PICA, and an 8 mm cellulose acetate tow (8.0/32,000) tobacco-end segment with 7% triacetin.

A ring of laser perforations is provided around the periphery of each cigarette about 13 mm from the extreme mouth-end thereof. The perforations penetrate through the tipping paper and plug wrap, and can be provided using a Laboratory Laser Perforator from Hauni-Werk Korber & Co. KG. The cigarettes are air diluted to about 34 percent. The cigarettes yield about 10 mg "tar" and 0.8 mg nicotine when smoked under FTC smoking conditions.

### Example 2

Cigarettes are provided as described in Example 1, except the filter element comprises an 8 mm mouth-end end cellulose acetate tow (8.0/32,000) segment with 7% triacetin, a 7 mm compartment filled with granular carbon available as G277 (85 carbon tetrachloride activity and size 20x50 mesh) from PICA, and a 12 mm cellulose acetate tow (2.5/35,000) tobacco-end segment with 7% triacetin. The cigarettes yield about 10 mg "tar" and 0.8 mg nicotine when smoked under FTC smoking conditions.

The cigarette of Example 2 made with the filter segment having the higher particulate removal efficiency proximal to the tobacco rod and with the ventilation holes positioned closer to the tobacco rod provides greater reduction in certain volatile and semi-volatile mainstream smoke components as compared to the cigarette of Example 1 when smoked under FTC smoking conditions. The cigarettes of Example 2 provide about 5 percent reduction of catechol, about 28 percent reduction in p-,+ m- cresol, about 17 percent reduction in formaldehyde, about 29 percent reduction in acetaldehyde, about 65 percent reduction in acetone, about 67 percent reduction in acrolein, and about 28 percent reduction in hydrogen cyanide.

### Example 3

Cigarettes are provided as described in Example 1. However, a flavor capsule is inserted by hand into the mouth-end plasticized cellulose acetate tow such that the capsule is imbedded in the mouth-end section of filter material. This flavor capsule is obtainable from Mane Aromatic Flavors as Reference E127384 (menthol). The cigarettes can be smoked with or without breaking the capsule.

### Example 4

Exemplary cigarettes are prepared using a tobacco rod, paper wrap and tipping material as described in Example 1. The tobacco rod length of the exemplary cigarettes is about 57 mm and the filter element length is about 30 mm.

The exemplary cigarettes have the general configuration shown in Figure 3. The exemplary cigarettes have a filter element comprising a 10 mm mouth end cellulose acetate plug of 2.5/35,00 tow with 7% triacetin, a 7 mm compartment filled with granular activated carbon available as G277 from PICA (85 carbon tetrachloride activity; particle size 20x50 mesh), a 2 mm cellulose acetate plug of 2.5/35,000 tow, a 5 mm hollow compartment, and a 6 mm cellulose acetate plug of 8.0/32,000 tow with 7% triacetin proximal to the tobacco rod. The cigarettes are air diluted to about 34 percent. The cigarettes yield about 10 mg "tar" and 0.8 mg nicotine when smoked under FTC smoking conditions.

The exemplary cigarettes having the divided compartment containing the adsorbent in the downstream compartment and having a hollow upstream compartment provides greater reduction of certain vapor phase mainstream smoke components as compared to the cigarette of Example 1 when smoked under FTC smoking conditions. The exemplary cigarettes provide about 6% reduction of formaldehyde, about 7% reduction in acetaldehyde, about 11% reduction in acetone, and about 8% reduction in acrolein.

### Example 5

Exemplary cigarettes are prepared using a tobacco rod, paper wrap and tipping material as described in Example 1. The tobacco rod length of the exemplary cigarettes is about 57 mm and the filter element length is about 27 mm.

The exemplary cigarettes have a filter element comprising an 8 mm mouth-end end cellulose acetate tow (8.0/32,000) segment with 7% triacetin, a 7 mm compartment filled with granular carbon available as G277 (85 carbon tetrachloride activity and size 20x50 mesh) from PICA, and a 12 mm cellulose acetate tow (2.5/35,000) tobacco-end segment with 7% triacetin. The tobacco end segment of filter material in some exemplary cigarettes comprises 6 tubes 0.2 to 3 mm in diameter inserted around the periphery. The tobacco end segment of filter material in other exemplary cigarettes comprises a single tube 0.2 to 3 mm in diameter inserted in the center of the filter segment. The cigarettes are air diluted to about 34 percent. The cigarettes yield about 10 mg "tar" and 0.8 mg nicotine when smoked under FTC smoking conditions.

The exemplary cigarettes having one or more tubes in the tobacco end segment of filter material provide greater reduction of certain vapor phase mainstream smoke components as compared to the cigarette of Example 1. The exemplary cigarettes provide about 13-18% reduction of formaldehyde, about 3-4% reduction in acetaldehyde, about 7-12% reduction in acetone, and about 15-16% reduction in acrolein.

### Example 6

Exemplary cigarettes are prepared using a tobacco rod, paper wrap and tipping material as described in Example 1. The tobacco rod length of the exemplary cigarettes is about 57 mm and the filter element length is about 27 or 31 mm.

The first exemplary cigarette has a filter element comprising a 10 mm mouth-end cellulose acetate tow (2.5 denier per filament / 35,000 total denier) segment with 7% triacetin, a 7 mm compartment filled with granular carbon available as G277 (85 carbon tetrachloride activity and size 20x50 mesh) from PICA, a 2 mm low efficiency cellulose acetate tow (8.0/32,000) with 7% triacetin, a 4 mm compartment filled with polymeric ion-exchange resin (benzenemethanamine, ar-ethyenyl-N,N-dimethyl-, polymer with divinylbenzene known as DCA11, particle size 16x50 mesh, from Mitsubishi Chemical Corp.), and an 8 mm cellulose acetate tow (8.0/32,000) tobacco-end segment with 7% triacetin. The second exemplary cigarette has a filter element comprising a 12 mm mouth-end cellulose acetate tow (2.5 denier per filament / 35,000 total denier) segment with 7% triacetin, a 7 mm compartment filled with granular carbon available as G277 (85 carbon tetrachloride activity and size 20x50 mesh) from PICA., and an 8 mm cellulose acetate tow (8.0/32,000) tobacco-end with 7% triacetin and DCA11 ion-exchange resin embedded within the cellulose acetate fibers. The cigarettes are air diluted to about 34 percent. The cigarettes yield about 10 mg "tar" and 0.8 mg nicotine when smoked under FTC smoking conditions.

The exemplary cigarettes containing activated carbon and an ion-exchange resin provide greater reduction of formaldehyde as compared to the cigarette of Example 1 when smoked under FTC smoking conditions. The experimental cigarettes provide about 18-32% reduction of formaldehyde.

### Example 7

Exemplary cigarettes are prepared using a tobacco rod, paper wrap and tipping material as described in Example 1. The tobacco rod length of the exemplary cigarettes is about 57 mm and the filter element length is about 27 mm.

The exemplary cigarettes have a filter element comprising a 12 mm mouth-end cellulose acetate tow (2.5 denier per filament / 35,000 total denier) segment with 7% triacetin, a 7 mm compartment filled with granular almond-shell carbon (70 carbon tetrachloride activity and size 20x50) mesh from PICA, and an 8 mm cellulose acetate tow (8.0/32,000) tobacco-end segment with 7% triacetin. The cigarettes are air diluted to about 34 percent. The cigarettes yield about 10 mg "tar" and 0.8 mg nicotine when smoked under FTC smoking conditions.

The exemplary cigarettes containing almond shell carbon provides greater reduction of carbonyl compounds as compared to the cigarette of Example 1 containing coconut-shell carbon (G277) when smoked under FTC and alternative smoking conditions. The exemplary cigarettes provide about 20-40% reduction of carbonyls.

## Claims

1. A cigarette (10) comprising a tobacco rod (12) and a filter element (20) connected to the tobacco rod (12), said filter element (20) having an end proximal to the tobacco rod (12) and an end distal from the tobacco rod (12), wherein said filter element (20) comprises:
a first longitudinally extending section of filter material (36) positioned at the end of the filter element (20) distal from the tobacco rod (12);
a second longitudinally extending section of filter material (38) positioned between said first section (36) of filter material and said tobacco rod (12);
an optional compartment formed between the first section of filter material (36) and the second section of filter material (38);
an adsorbent material (34) contained within at least a portion of said compartment or dispersed in said second section of filter material (38); and
at least one breakable capsule (54) contained within said first section of filter material (36).

2. The cigarette of Claim 1, wherein said first section of filter material and said second section of filter material comprise plasticized cellulose acetate tow.

3. The cigarette of Claim 1, wherein said adsorbent is selected from the group consisting of activated carbon, molecular sieves, clays, activated aluminas, silica gels, and mixtures thereof.

4. The cigarette of Claim 1, wherein said adsorbent is activated carbon.

5. The cigarette of Claim 4, wherein the activated carbon has an activity of 60 to 150 Carbon Tetrachloride Activity.

6. The cigarette of Claim 1, wherein said adsorbent is in granular form.

7. The cigarette of Claim 6, wherein said adsorbent has a particle size of 8x16 mesh to 30x70 mesh.

8. The cigarette of Claim 1, wherein said first section of filter material has a greater particulate removal efficiency than said second section of filter material.

9. The cigarette of Claim 8, wherein said first section of filter material and said second section of filter material comprise a fibrous filter material, and said first section of filter material comprises filaments having a lower weight per unit length than the filaments of said second section of filter material.

10. The cigarette of Claim 9, wherein said first section of filter material comprises filaments having a weight per unit length of less than 2.5 denier per filament and said second section of filter material comprises filaments having a weight per unit length of greater than 3.0 denier per filament.

11. The cigarette of Claim 10, wherein said first section of filter material comprises filaments having a weight per unit length of 1.8 to 2.5 denier per filament and said second section of filter material comprises filaments having a weight per unit length of 3.0 to 10 denier per filament.

12. The cigarette of Claim 1, wherein said first section of filter material comprises:
a longitudinally extending central portion of filter material;
a longitudinally extending outer portion of filter material positioned annularly around the central portion; and
a compartment having a structure defined by the central portion, wherein said breakable capsule is contained with said compartment.

13. The cigarette of Claim 12, wherein the central portion and the outer portion of said first section of filter material comprises cellulose acetate tow.

14. The cigarette of Claim 1, wherein the breakable capsule contains flavoring for mainstream smoke generated by the cigarette or a breath freshening agent.

15. The cigarette of Claim 1, wherein the capsule is generally spherical in shape.

16. The cigarette of Claim 1, wherein the breakable capsule comprises:
an outer gelatin shell; and
an inner liquid composition contained in the outer gelatin shell, the inner liquid composition including at least one flavoring agent and at least one diluting agent.

17. The cigarette of Claim 16, wherein the diluting agent is a medium chain triglyceride mixture.

18. The cigarette of Claim 1, further comprising tipping material connecting the tobacco rod and the filter element, wherein said tipping material includes a visual indicator of the position of the capsule within the filter element.

19. The cigarette of Claim 1, wherein the capsule has a diameter of at least 3 mm.

20. The cigarette of Claim 19, wherein the capsule has a diameter of less than 5 mm.

## Patentansprüche

1. Zigarette (10), umfassend ein Tabakstäbchen (12) und ein mit dem Tabakstäbchen (12) verbundenes Filterelement (20), wobei das Filterelement (20) ein Ende proximal zu dem Tabakstäbchen (12) und ein Ende distal von dem Tabakstäbchen (12) aufweist, wobei das Filterelement (20) umfasst:
einen ersten sich longitudinal erstreckenden Abschnitt von Filtermaterial (36), positioniert an dem Ende des Filterelementes (20) distal von dem Tabakstäbchen (12);
einen zweiten sich longitudinal erstreckenden Abschnitt von Filtermaterial (38), positioniert zwischen dem ersten Abschnitt (36) von Filtermaterial und dem Tabakstäbchen (12);
ein optionales Kompartiment, welches zwischen dem ersten Abschnitt von Filtermaterial (36) und dem zweiten Abschnitt von Filtermaterial (38) gebildet ist;
ein Adsorbensmaterial (34), welches innerhalb mindestens eines Bereichs des Kompartiments enthalten ist oder in dem zweiten Abschnitt von Filtermaterial (38) dispergiert ist; und
mindestens eine brechbare Kapsel (54), welche innerhalb des ersten Abschnitts von Filtermaterial (36) enthalten ist.

2. Zigarette nach Anspruch 1, wobei der erste Abschnitt von Filtermaterial und der zweite Abschnitt von Filtermaterial plastifiziertes Celluloseacetat-Tow umfassen.

3. Zigarette nach Anspruch 1, wobei das Adsorbens ausgewählt ist aus der Gruppe, welche aus aktiviertem Kohlenstoff, Molekularsieben, Tonen, aktivierten Aluminiumoxiden, Silicagelen und Mischungen hiervon besteht.

4. Zigarette nach Anspruch 1, wobei das Adsorbens aktivierter Kohlenstoff ist.

5. Zigarette nach Anspruch 4, wobei der aktivierte Kohlenstoff eine Aktivität von 60 bis 150 Kohlenstofftetrachloridaktivität aufweist.

6. Zigarette nach Anspruch 1, wobei das Adsorbens in körniger Form vorliegt.

7. Zigarette nach Anspruch 6, wobei das Adsorbens eine Partikelgröße von 8x16 mesh bis 30x70 mesh aufweist.

8. Zigarette nach Anspruch 1, wobei der erste Abschnitt von Filtermaterial eine größere Partikelentfernungseffizienz aufweist als der zweite Abschnitt von Filtermaterial.

9. Zigarette nach Anspruch 8, wobei der erste Abschnitt von Filtermaterial und der zweite Abschnitt von Filtermaterial ein faseriges Filtermaterial umfassen und wobei der erste Abschnitt von Filtermaterial Filamente mit einem niedrigeren Gewicht pro Längeneinheit als die Filamente des zweiten Abschnitts von Filtermaterial umfasst.

10. Zigarette nach Anspruch 9, wobei der erste Abschnitt von Filtermaterial Filamente mit einem Gewicht pro Längeneinheit von kleiner als 2,5 Denier pro Filament umfasst und wobei der zweite Abschnitt von Filtermaterial Filamente mit einem Gewicht pro Längeneinheit von größer als 3,0 Denier pro Filament umfasst.

11. Zigarette nach Anspruch 10, wobei der erste Abschnitt von Filtermaterial Filamente mit einem Gewicht pro Längeneinheit von 1,8 bis 2,5 Denier pro Filament umfasst und wobei der zweite Abschnitt von Filtermaterial Filamente mit einem Gewicht pro Längeneinheit von 3,0 bis 10 Denier pro Filament umfasst.

12. Zigarette nach Anspruch 1, wobei der erste Abschnitt von Filtermaterial umfasst:
einen sich longitudinal erstreckenden zentralen Bereich von Filtermaterial;
einen sich longitudinal erstreckenden äußeren Bereich von Filtermaterial, der ringförmig um den zentralen Bereich positioniert ist; und
ein Kompartiment mit einer durch den zentralen Bereich definierten Struktur, wobei die brechbare Kapsel innerhalb des Kompartiments enthalten ist.

13. Zigarette nach Anspruch 12, wobei der zentrale Bereich und der äußere Bereich des ersten Abschnitts von Filtermaterial Celluloseacetat-Tow umfassen.

14. Zigarette nach Anspruch 1, wobei die brechbare Kapsel ein Flavouring-Agens für durch die Zigarette erzeugten Hauptstromrauch oder einen Atemerfrischer umfasst.

15. Zigarette nach Anspruch 1, wobei die Kapsel eine im Wesentlichen kugelige Form aufweist.

16. Zigarette nach Anspruch 1, wobei die brechbare Kapsel umfasst:
eine äußere Gelatinehülle; und
eine innere Flüssigkeitszusammensetzung, welche in der äußeren Gelatinehülle enthalten ist, wobei die innere Flüssigkeitszusammensetzung mindestens ein Flavouring-Agens und mindestens ein Verdünnungs-Agens umfasst.

17. Zigarette nach Anspruch 16, wobei das Verdünnungs-Agens eine Mischung von mittelkettigen Triglyceriden ist.

18. Zigarette nach Anspruch 1, ferner umfassend ein Mundstückbelagmaterial, welches das Tabakstäbchen und das Filterelement verbindet, wobei das Mundstückbelagmaterial einen optischen Indikator für die Position der Kapsel innerhalb des Filterelements umfasst.

19. Zigarette nach Anspruch 1, wobei die Kapsel einen Durchmesser von mindestens 3 mm aufweist.

20. Zigarette nach Anspruch 19, wobei die Kapsel einen Durchmesser von weniger als 5 mm aufweist.

## Revendications

1. Cigarette (10) comprenant une tige de tabac (12) et un élément de filtre (20) relié à la tige de tabac (12), ledit élément de filtre (20) ayant une extrémité proximale par rapport à la tige de tabac (12) et une extrémité distale par rapport à la tige de tabac (12), où ledit élément de filtre (20) comprend :
une première section, s'étendant longitudinalement, de matériau de filtre (36) positionnée à l'extrémité de l'élément de filtre (20) distale par rapport à la tige de tabac (12) ;
une deuxième section, s'étendant longitudinalement, de matériau de filtre (38) positionnée entre ladite première section de matériau de filtre (36) et ladite tige de tabac (12) ;
un compartiment facultatif formé entre la première section de matériau de filtre (36) et la deuxième section de matériau de filtre (38) ;
un matériau adsorbant (34) contenu dans au moins une partie dudit compartiment ou dispersé dans ladite deuxième section de matériau de filtre (38) ; et
au moins une capsule (54) susceptible de rupture contenue dans ladite première section de matériau de filtre (36).

2. Cigarette de la revendication 1, dans laquelle ladite première section de matériau de filtre et ladite deuxième section de matériau de filtre comprennent une mèche d'acétate de cellulose plastifiée.

3. Cigarette de la revendication 1, dans laquelle ledit adsorbant est choisi dans le groupe constitué de charbon actif, de tamis moléculaires, d'argiles, d'alumines activées, de gels de silice et de leurs mélanges.

4. Cigarette de la revendication 1, dans laquelle ledit adsorbant est du charbon actif.

5. Cigarette de la revendication 4, dans laquelle le charbon actif a une activité de 60 à 150 déterminée comme l'activité du tétrachlorure de carbone.

6. Cigarette de la revendication 1, dans laquelle ledit adsorbant est sous forme granulaire.

7. Cigarette de la revendication 6, dans laquelle ledit adsorbant a une dimension de particules de 8 x 16 mesh à 30 x 70 mesh.

8. Cigarette de la revendication 1, dans laquelle ladite première section de matériau de filtre a une plus grande efficacité d'extraction particulaire que ladite deuxième section de matériau de filtre.

9. Cigarette de la revendication 8, dans laquelle ladite première section de matériau de filtre et ladite deuxième section de matériau de filtre comprennent un matériau de filtre fibreux, et ladite première section de matériau de filtre comprend des filaments ayant un moindre poids par unité de longueur que les filaments de ladite deuxième section de matériau de filtre.

10. Cigarette de la revendication 9, dans laquelle ladite première section de matériau de filtre comprend des filaments ayant un poids par unité de longueur inférieur à 2,5 deniers par filament et ladite deuxième section de matériau de filtre comprend des filaments ayant un poids par unité de longueur supérieur à 3,0 deniers par filament.

11. Cigarette de la revendication 10, dans laquelle ladite première section de matériau de filtre comprend des filaments ayant un poids par unité de longueur de 1,8 à 2,5 deniers par filament et ladite deuxième section de matériau de filtre comprend des filaments ayant un poids par unité de longueur de 3,0 à 10 deniers par filament.

12. Cigarette de la revendication 1, dans laquelle ladite première section du matériau de filtre comprend :
une partie centrale, s'étendant longitudinalement, de matériau de filtre ;
une partie externe, s'étendant longitudinalement, de matériau de filtre positionnée de manière annulaire autour de la partie centrale ; et
un compartiment ayant une structure définie par la partie centrale, où ladite capsule susceptible de rupture est contenue avec ledit compartiment.

13. Cigarette de la revendication 12, dans laquelle la partie centrale et la partie externe de ladite première section de matériau de filtre comprennent une mèche d'acétate de cellulose.

14. Cigarette de la revendication 1, dans laquelle la capsule susceptible de rupture contient un agent aromatisant pour la fumée principale générée par la cigarette ou un agent rafraîchissant l'haleine.

15. Cigarette de la revendication 1, dans laquelle la capsule est sous forme globalement sphérique.

16. Cigarette de la revendication 1, dans laquelle la capsule susceptible de rupture comprend :
une coque externe en gélatine ; et
une composition liquide interne contenue dans la coque externe en gélatine, la composition liquide interne comportant au moins un agent aromatisant et au moins un agent de dilution.

17. Cigarette de la revendication 16, dans laquelle l'agent de dilution est un mélange de triglycérides à chaîne moyenne.

18. Cigarette de la revendication 1, comprenant en outre un matériau de manchette reliant la tige de tabac et l'élément de filtre, où ledit matériau de manchette comporte un indicateur visuel de la position de la capsule dans l'élément de filtre.

19. Cigarette selon la revendication 1, dans laquelle la capsule a un diamètre d'au moins 3 mm.

20. Cigarette selon la revendication 19, dans laquelle la capsule a un diamètre de moins de 5 mm.
